# EUROPÄISCHE PATENTSCHRIFT

(11) **EP 0 883 755 B1**
(45) Veröffentlichungstag und Bekanntmachung des Hinweises auf die Patenterteilung: **10.05.2000**
(21) Anmeldenummer: 97905077.0
(22) Anmeldetag: 22.02.1997
(51) Int. Cl.: F16B 13/12

(54) **SCHLAGDÜBEL**
KNOCK-IN PIN DOWEL
CHEVILLE A PERCUSSION

(30) Priorität: 28.02.1996 DE 19607446
(43) Veröffentlichungstag der Anmeldung: 16.12.1998
(73) Patentinhaber: Adolf Würth GmbH & Co. KG, 74653 Künzelsau (DE)
(72) Erfinder: WIELAND, Achim, 74211 Leingarten (DE)
(74) Vertreter: Patentanwälte Ruff, Beier, Schöndorf und Mütschele
(86) Internationale Anmeldenummer: EP9700858
(87) Internationale Veröffentlichungsnummer: WO9732142

(56) Entgegenhaltungen:
- DE-U- 9 202 546
- GB-A- 935 761
- LU-A- 46 912
- US-A- 4 662 808

## Beschreibung

Die Erfindung geht aus von einem Schlagdübel. Schlagdübel bestehen üblicherweise aus Kunststoff und werden vorkonfektioniert mit einem bereits etwas in die Dübelhülse eingesteckten Spreizelement verkauft. Die Montage eines Gegenstandes an einem Untergrund geschieht sehr einfach, da der Dübel durch den zu befestigenden Gegenstand nur eingesteckt zu werden braucht, wobei dann der Monteur mit Hilfe eines Hammers auf den Kopf des Spreizelementes schlägt. Dieser Schlag dient sowohl zum vollständigen Einschieben der Dübelhülse als auch zum anschließenden Aufspreizen der Dübelhülse durch das in sie eingetriebene Spreizelement.

Üblicherweise enthält die Dübelhülse einen Spreizteil, der zwei diametral angeordnete Längsschlitze aufweist, so daß zwei Segmente gebildet werden, die nach außen aufgeklappt werden. Als Spreizelement dient meistens ein mit einem sägezahnförmigen Gewinde versehener Nagel, bei dem das Gewinde den Einschlagvorgang nicht behindert (DE-OS 26 07 338, DE-OS 39 12 749).

Diese Art von Dübel wird in der Regel bei Beton als Untergrund verwendet, in dem sich relativ gute zylindrische Bohrlöcher herstellen lassen.

Es gibt jedoch zunehmend mehr Baustoffe, bei denen das Material lockerer sitzt, so daß sich keine exakten Dübellöcher herstellen lassen, beispielsweise Hohlkammersteine oder Leichtbaustoffe. In diesen Baustoffen halten daher die Schlagdübel nicht ausreichend fest.

Es ist bereits ein Dübel bekannt (LU-A-46 912), der einen ersten durch zwei diametrale Längsschlitze gebildeten Spreizbereich aufweist, an den sich mit Abstand ein zweiter Spreizbereich anschließt. Beide Spreizbereiche sind in Längsrichtung des Dübels durch einen nicht aufspreizbaren Bereich getrennt.

Der Erfindung liegt die Aufgabe zugrunde, einen Schlagdübel zu schaffen, der auch bei ungünstigen Wandbaustoffen eine gute Verankerung gewährleistet.

Zur Lösung dieser Aufgabe schlägt die Erfindung einen Schlagdübel mit den im Anspruch 1 aufgeführten Merkmalen vor. Weiterbildungen der Erfindung sind Gegenstand von abhängigen Ansprüchen.

Durch die Verwendung zweier an unterschiedlichen Stellen der Dübelhülse angeordneter Längsschlitze wird der Spreizteil der Dübelhülse praktisch in zwei Spreizbereiche aufgeteilt, die sich jeweils für sich aufspreizen und daher an eine Dübellochwand anlegen können. Selbst dann, wenn der eine Spreizbereich nicht zu einer Verankerung führen kann, da dort beispielsweise eine Kammer eines Hohlkammersteins liegt, kann dann der zweite Spreizbereich die Verankerung durchführen. In unregelmäßig geformten Bohrlöchern können die beiden Spreizbereiche unterschiedlich weit aufgespreizt werden. Der Dübel führt also auch dann, wenn der Baustoff nicht besonders günstig ist, immer zu einer guten Verankerung, in vielen Fällen auch längs einer größeren Fläche mit einer gleichbleibenden Anpreßkraft.

Erfindungsgemäß kann in Weiterbildung vorgesehen sein, daß der mindestens eine bzw. auch mehrere Längsschlitze des ersten Spreizbereichs gegenüber dem mindestens einen Längsschlitz des zweiten Spreizbereichs in Umfangsrichtung versetzt angeordnet ist.

In nochmaliger Weiterbildung kann erfindungsgemäß vorgesehen sein, daß sich die Längsschlitze in den beiden Spreizbereichen in Längsrichtung der Dübelhülse überlappen. Damit kann erreicht werden, daß sich auch die beiden Spreizbereiche etwas überlappen. Im anderen Fall, wenn sich die beiden Spreizbereiche nicht überlappen, kann ein mittlerer Bereich gebildet werden, in dem keine Aufspreizung erfolgt. Dies kann je nach den Einzelfällen auch gewünscht sein. Die Überlappung der Spreizbereiche führt jedoch dazu, daß praktisch ein verlängerter Spreizbereich geschaffen wird, der bei guten Bohrlöchern zu einer Anklemmung längs einer großen Länge führt, während die Vorteile zweier getrennter Spreizbereiche in schlechtem Material beibehalten werden.

Die Erfindung schlägt vor, in jedem Spreizbereich mindestens zwei Längsschlitze vorzusehen. Zwar ist auch bei in nur einem Längsschlitz eine Aufspreizung gegeben, jedoch gestaltet sich die Aufspreizung bei zwei Längsschlitzen günstiger.

Da das Aufspreizverhalten des Spreizbereichs mit den beidseitig geschlossenen Längsschlitzen anders ist als ein Spreizverhalten des Spreizbereichs am Ende des Dübels, wo die Längsschlitze bis zum Ende durchgehen und daher nicht geschlossen zu sein brauchen, kann erfindungsgemäß in Weiterbildung vorgesehen sein, daß in beiden Spreizbereichen eine unterschiedliche Zahl von Längsschlitzen vorhanden ist.

Es ist ebenfalls möglich, daß die Länge der beiden Spreizbereiche unterschiedlich groß ist.

Da die Dübelhülse aus Kunststoff gespritzt werden soll, kann zur vereinfachten Herstellung des Dübels nach der Erfindung vorgesehen werden, daß die Außenfläche der Dübelhülse beidseits des Längsschlitzes des ersten Spreizbereichs von dem Kreisquerschnitt nach innen abweichend abgeplattet ausgebildet wird. Auf diese Weise wird es möglich, die Schlitze mit Hilfe des die Innenöffnung der Dübelhülse bildenden Kerns herzustellen, indem man an diesem Kern seitliche Rippen ansetzt, deren radiale Außenseiten nicht bis zum Außendurchmesser der Dübelhülse reichen, sondern nur bis zu den abgeplatteten Bereichen. Dieser Kern kann daher nach Herstellung des Dübels nach vorne aus der Form herausgezogen werden.

Erfindungsgemäß kann in Weiterbildung vorgesehen sein, daß die Innenöffnung der Dübelhülse von dem Dübelkopf ausgehend einen ersten zylindrischen Bereich und daran anschließend einen sich in seinem Durchmesser verjüngenden Bereich aufweist. Dieser erste zylindrische Bereich dient unter anderem zum Halten des Spreizelementes, da die Schlagdübel dieser Art in vorkonfektioniertem Zustand verkauft und benutzt werden sollen. Das Spreizelement wird daher in diesem zylindrischen Bereich unter einer gewissen Klemmung festgehalten, so daß er aus der Dübelhülse nicht herausfällt.

Es kann vorgesehen sein, daß die Länge des zylindrischen Bereichs der Innenöffnung etwa der Länge des nicht aufspreizbaren Schaftteils der Dübelhülse entspricht.

In nochmaliger Weiterbildung der Erfindung kann zwischen dem zylindrischen und dem sich in seinem Durchmesser verringernden Bereich der Innenöffnung eine etwa rechtwinklig verlaufende Innenschulter ausgebildet werden.

Beim Einschlagen des Dübels liegt das Spreizelement, das eine kegelförmige Spitze aufweisen kann, an dieser Schulter an. Die durch den Schlag auf den Kopf des Spreizelementes einwirkende Kraft soll ja zunächst den Dübel soweit wie möglich in das Bohrloch einschieben. Erst anschließend soll das Spreizelement die Dübelhülse aufspreizen. Durch das Vorsehen der nach innen gerichteten Schulter wird hier eine Möglichkeit geschaffen, den Widerstand einzustellen, der erst überwunden werden muß, bevor das Spreizelement zur Aufspreizung in die Dübelhülse eindringt.

Die Erfindung schlägt vor, als Spreizelement einen mit einem Gewinde versehenen Schraubnagel zu verwenden. Das Gewinde ist üblicherweise ein Sägezahngewinde mit einer flachen vorderen Schulter und einer steileren rückwärtigen Schulter. Die flache Schulter soll es ermöglichen, daß der Nagel in den Dübel eingeschlagen werden kann, ohne daß das Gewinde diese Bewegung behindert. Die steilere Schulter soll das Herausziehen des Nagels verhindern. Das Gewinde ist allenfalls zum Herausdrehen des Schlagdübels erforderlich, nicht aber zum Setzen des Dübels. Zur Verhinderung des Herausziehens des Dübels könnte auch eine umlaufende Verrippung dienen.

Erfindungsgemäß kann nun vorgesehen sein, daß der Schaft des Schraubnagels an seiner Spitze einen ersten gewindefreien Abschnitt aufweist. Für die Funktion des Dübels beim Setzen ist es erforderlich, daß die Spreizbewegung des Dübels erst eintritt, wenn der Dübel gesetzt ist. Um hier möglichst geringe Toleranzen bei dem Setzen des Dübels zu haben, sieht die Erfindung vor, den gewindefreien Abschnitt des Schraubnagels auf den Innendurchmesser des zylindrischen Teils der Innenöffnung auf die Querschnittsverengung durch die Ringschulter abzustimmen. Ein gewindefreier Abschnitt läßt sich mit viel größerer Präzision auf einen bestimmten Durchmesser abstellen als das später auf den Schaft aufgewalzte Gewinde. Daher führt der gewindefreie Abschnitt zu einer präziseren Abstimmung des Dübels.

Weitere Merkmale, Einzelheiten und Vorzüge ergeben sich aus den Patentansprüchen, deren Wortlaut durch Bezugnahme zum Inhalt der Beschreibung gemacht wird, der folgenden Beschreibung einer bevorzugten Ausführungsform der Erfindung sowie anhand der Zeichnung. Hierbei zeigen:
- Fig. 1: eine Seitenansicht eines Dübels nach der Erfindung;
- Fig. 2: eine Seitenansicht des Dübels aus einer um 90° verdrehten Richtung;
- Fig. 3: einen Längsschnitt durch die Dübelhülse;
- Fig. 4: einen gegenüber der Fig. 3 um 90° versetzten Längsschnitt durch die Dübelhülse;
- Fig. 5: einen ersten Querschnitt durch die Dübelhülse längs Linie V-V;
- Fig. 6: einen zweiten Querschnitt durch die Dübelhülse längs Linie VI-VI;
- Fig. 7: das vordere Ende eines für die Dübelhülse der vorstehenden Figuren bestimmten Spreizelementes.

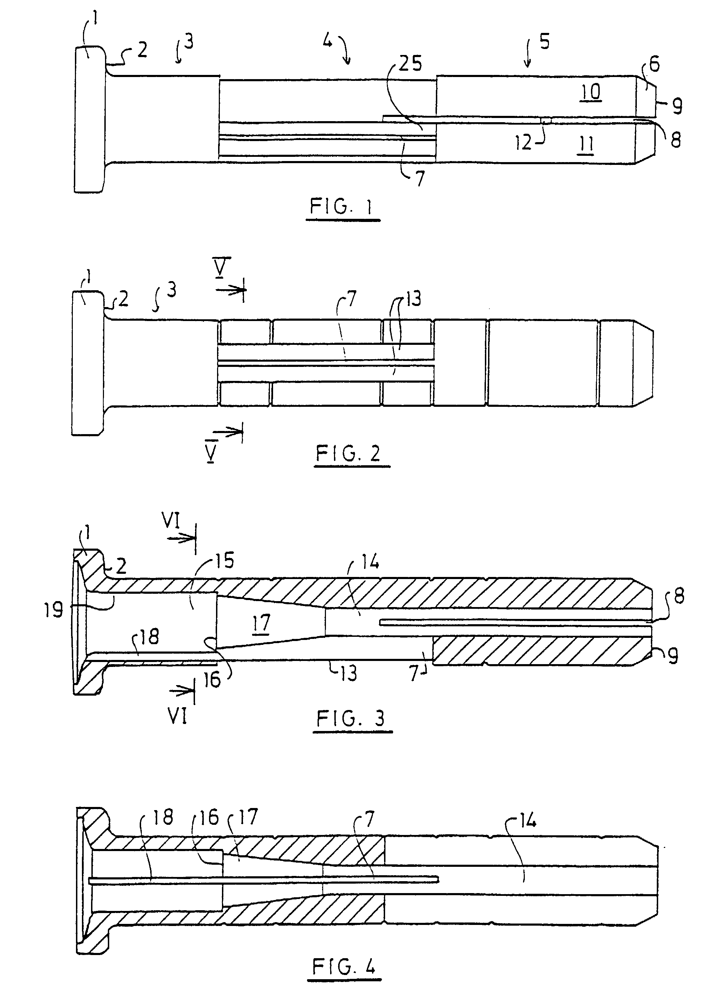

Die Figuren 1 bis 4 zeigen Seitenansichten bzw. Längsschnitte durch die Dübelhülse des Dübels nach der Erfindung. Die Dübelhülse enthält an ihrem einen, bei der Montage in einem Dübelloch äußeren Ende einen Dübelkopf 1. Der Dübelkopf 1 weist im dargestellten Beispiel einen gegenüber dem Rest der Dübelhülse vergrößerten Umfang auf, so daß an seiner Unterseite 2 eine zur Anlage an dem zu befestigenden Gegenstand bestimmte Anlagefläche gebildet wird. Diese Anlagefläche 2 begrenzt gleichzeitig auch die Einschlagbewegung der Dübelhülse.

An den Dübelkopf 1 schließt sich ein Schaftteil 3 an, in dem die Dübelhülse bei einer konstanten Wandstärke einen nicht aufweitbaren Bereich bildet. Die axiale Länge dieses Schaftteils 3 wird versucht, so zu bemessen, daß sie beispielsweise der Dicke des zu befestigenden Gegenstandes entspricht oder etwas größer ist, da eine Verklemmung ja mit der Wand erfolgen soll, an der der Gegenstand befestigt wird.

An den nicht aufweitbaren Schaftteil 3 schließt sich dann ein erster Spreizbereich 4 und an diesen ein zweiter Spreizbereich 5 an. Beide Spreizbereiche sind in Längsrichtung des Dübels gesehen etwa gleich lang. Das innere Ende der Dübelhülse, in Fig. 1 rechts, weist eine das Einführen der Dübelhülse erleichternde Abschrägung 6 auf.

Während die Dübelhülse in ihrem Schaftteil 3 keine Längsschlitze aufweist und daher nicht aufweitbar ist, enthält sie in dem ersten Spreizbereich über den Umfang verteilt drei Längsschlitze 7, von denen in der Seitenansicht der Fig. 1 nur ein Längsschlitz 7 zu sehen ist. Die Längsschlitze 7 des ersten Spreizbereiches 4 beginnen am Ende des nicht aufspreizbaren Schaftteils 3 und enden etwa in der Mitte des aus den beiden Spreizbereichen 4 und 5 zusammengesetzten Spreizteils der Dübelhülse. Da bei der dargestellten Ausführungsform die drei Längsschlitze 7 des ersten Spreizbereiches 4 gleichmäßig über den Umfang verteilt sind, liegt der zweite Längsschlitz hinter der Zeichnungsebene und der dritte oben.

Im zweiten Spreizbereich 5 enthält die Dübelhülse zwei Längsschlitze 8, die bzgl. des Durchmessers diametral angeordnet sind, so daß der zweite Längsschlitz 8 exakt hinter dem ersten sichtbaren liegt. Die Längsschlitze 8 des zweiten Spreizbereiches beginnen etwa in der Mitte des Spreizteils der Dübelhülse und reichen bis zum inneren Ende 9 der Dübelhülse, wo diese Schlitze 8 offen sind.

Die beiden, durch die beiden Längsschlitze 8 getrennten Aufspreizsegmente 10, 11 des zweiten Spreizbereiches sind durch je zwei Stege 12 miteinander verbunden, die beim Setzen des Dübels und bei seinem Aufweiten auseinanderreißen.

Wie man der Fig. 1 entnehmen kann, beginnt der Längsschlitz 8 des zweiten Spreizbereiches 5 schon vor dem Ende des ersten Längsschlitzes 7 des ersten Spreizbereiches 4, so daß in Axialrichtung gesehen eine Überlappung der Längsschlitze 7, 8 gegeben ist.

Fig. 2 zeigt eine Aufsicht auf die Dübelhülse der Fig. 1 von oben in Fig. 1, so daß der dort erwähnte dritte Längsschlitz 7 des ersten Spreizbereiches 4 zu sehen ist.

Beidseits des Längsschlitzes 7 ist die Außenkontur der Dübelhülse nach innen abgeplattet ausgebildet, so daß sich beidseits des Längsschlitzes 7 je eine abgeplattete Fläche 13 ergibt. Aufgrund dieser Abplattung scheint in der Seitenansicht der Fig. 1 der Durchmesser des ersten Spreizbereiches 4 geringer zu sein.

Fig. 3 zeigt nun einen Längsschnitt durch die Dübelhülse nach der Erfindung. Die durch die ganze Dübelhülse hindurchgehende Innenöffnung 14 ist zur Aufnahme des Spreizelementes und im Zusammenwirken mit diesem zum Aufspreizen der Dübelhülse bestimmt. An dem äußeren Ende der Dübelhülse enthält die Innenöffnung 14 einen ersten zylindrischen Abschnitt 15. Die Länge dieses zylindrischen Abschnittes 15 und seine Anordnung entspricht im wesentlichen genau der des nicht aufweitbaren Schaftteils 3. An dem inneren Ende des zylindrischen Abschnittes 15 ist eine sprungartige Durchmesserverringerung vorgesehen, die eine etwa rechtwinklig verlaufende Stufe 16 bildet. Von dieser Stufe ausgehend verjüngt sich dann der Innendurchmesser der Innenöffnung und bildet auf diese Weise einen, mit einer Keilfläche 17 versehenen, sich verjüngenden Abschnitt. Die Länge dieses sich verjüngenden, die Keilfläche 17 bildenden Abschnitts ist etwa halb so lang wie die Länge des Längsschlitzes 7 des ersten Spreizbereiches 4.

Auch in Fig. 3 ist die Überlappung der beiden Arten von Längsschlitzen 7, 8 in Längsrichtung zu sehen. Ebenfalls zu sehen ist, daß die beiden Arten von Längsschlitzen 7 und 8 in Umfangsrichtung gesehen gegeneinander versetzt angeordnet sind.

Aus Fig. 3 ist unten zu sehen, daß die Außenkanten der Abplattungen 13 beidseits des Schlitzes 7 von der Längsmittelachse der Dübelhülse einen geringeren Abstand aufweisen als der Außendurchmesser des Schaftteils 3. Dadurch schließt sich in Richtung auf das äußere Ende der Dübelhülse an den Längsschlitz 7 des ersten Aufspreizbereiches 4 eine Nut 18 in der Innenwand 19 des zylindrischen Abschnittes 15 der Dübelhülse fort. Diese Nut 18 mündet an der äußeren Stirnseite der Dübelhülse.

Aufgrund dieser Zurücksetzung der Abplattungen 13 gegenüber dem eigentlichen zylindrischen Außenumfang der Dübelhülse ist es möglich, die Längsschlitze 7, die ja eigentlich eine begrenzte Länge haben, mit Hilfe eines äußere Rippen aufweisenden Kerns herzustellen, der nach Fertigstellung des Dübels in einer Spritzgießform nach vorne herausgezogen werden kann. Dadurch läßt sich die Kunststoffhülse in einer relativ einfach aufgebauten Form herstellen, da die Form zweiteilig mit einem von vorne her einsetzbaren Kern ausgebildet sein kann. Dieser Kern führt bis zum inneren Ende 9 der Dübelhülse.

Fig. 4 zeigt einen Längsschnitt durch die Dübelhülse in einer anderen Längsmittelebene. Hier ist der Schnitt so gelegt, daß er in den Längsschlitzen 8 des hinteren Spreizbereiches 5 liegt. Auch hier ist zu sehen, daß der Längsschlitz 7 des ersten Spreizbereiches 4 sich mit dem Längsschlitz 8 des inneren Spreizbereiches überlappt.

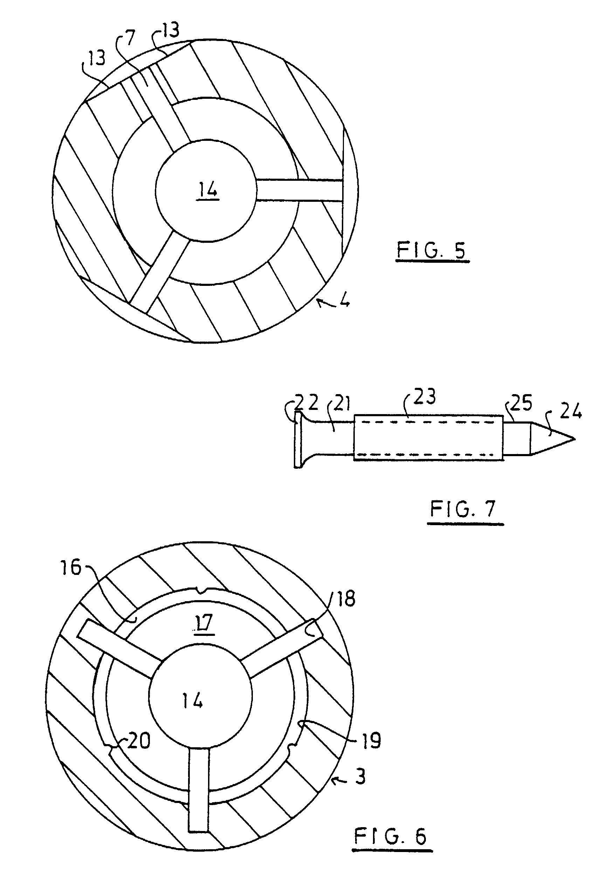

Fig. 5 zeigt nun in vergrößertem Maßstab einen Schnitt längs Linie V-V in Fig. 2. Der Schnitt ist also durch den ersten Spreizbereich 4 hindurchgelegt. Deutlich ist zu sehen, daß die drei gleichmäßig über den Umfang verteilten Längsschlitze 7 des ersten Spreizbereiches nur bis zu einer durch die Abplattung 13 gebildeten Stelle reicht, die gegenüber der Längsmittelachse einen geringeren Abstand aufweist als die nicht abgeplatteten Teile der Dübelhülse. Dadurch ist die bereits erwähnte Herstellung mit einem Kern mit Rippen möglich, da die Außenseiten der Rippen bis zur Abplattung 13 reicht, aber innerhalb der Wand des Schaftteils liegt.

Fig. 6 zeigt in gleichem Maßstab wie Fig. 5 einen Schnitt durch die Dübelhülse, und zwar an einer Stelle durch den Schaftteil 3. Die erwähnten äußeren Rippen des Kerns bilden hier die sichtbaren Nuten 18, die in der Innenwand 19 der zylindrischen Ausnehmung 15 im Schaftteil 3 der Dübelhülse gebildet werden.

An die Wand 19 schließt sich dann die in Zusammenhang mit Fig. 3 erwähnte Schulterfläche 16 an, an die sich dann wiederum die Kegelfläche 17 anschließt.

In der zylindrischen Ausnehmung 15 der Dübelhülse sind mittig zwischen den Nuten 18 kleine, etwa dreieckige, vorspringende Rippen 20 angeformt, die zum Festhalten und Führen des Spreizelementes dienen.

Das vordere Ende eines solchen Spreizelementes ist in Fig. 7 vereinfacht dargestellt. Es handelt sich um einen Gewindenagel, d.h. um ein Befestigungselement, das als Nagel mit einem zylindrischen Schaft 21 und einem Nagelkopf 22 ausgebildet ist, das aber über den größten Teil der Länge des Schaftes 21 ein aufgewalztes Gewinde 23 aufweist. Bei dem Gewinde handelt es sich um ein Gewinde mit einem Sägezahnprofil, wie es beispielsweise in der eingangs erwähnten DE-OS 39 12 749 dargestellt ist.

Das innere Ende des Schraubnagels weist eine kegelförmige Spitze 24 auf. Unmittelbar an die Spitze 24 schließt sich ein gewindefreier zylindrischer glatter Abschnitt 25 an, der in seinem Durchmesser auf den Durchmesser der zylindrischen Ausnehmung 15 abgestimmt ist. Bei Gewindenägeln läßt sich der Durchmesser des Schaftes und damit auch der Durchmesser des vorderen gewindefreien Abschnittes 25 wesentlich genauer herstellen als der Durchmesser des Gewindes. Beim Durchmesser des Gewindes können größere Toleranzen auftreten.

Der Schlagdübel nach der Erfindung wird folgendermaßen verwendet. Nach der Herstellung der Dübelhülse und des Gewindenagels wird dieser in die zylindrische Ausnehmung 15 eingesteckt, wo er von den Rippen 20 festgehalten wird. Er wird so weit eingesteckt, bis sein Kegelabschnitt 24 an der Kante zwischen der Stufe 16 und der Kegelfläche 17 anliegt. Der Kegelabschnitt 24 des Gewindenagels ist stumpfer als der des Kegelabschnittes 17 in der Dübelhülse.

Der Dübel wird in dieser Weise durch eine Öffnung eines an einer Wand zu befestigenden Gegenstandes hindurchgesteckt und in das Bohrloch eingesteckt. Dieses Einstecken kann mit der Hand gemacht werden. Es braucht nur so weit zu erfolgen, daß die Dübelhülse eine gewisse Führung erhält. Anschließend schlägt der Monteur mit dem Hammer auf den Kopf 22 des Gewindenagels. Dieser erzeugt nun zunächst eine Kraft in Längsrichtung der Dübelhülse, die an der Schulter 16 angreift und die Dübelhülse einschiebt, bis diese an der Unterseite 2 des Kopfes 1 auf dem zu befestigenden Gegenstand anliegt. Ein weiteres Eintreiben des Gewindenagels kann nicht mehr zu einer Verschiebung der Dübelhülse führen, so daß die Eintreibkraft des Hammers jetzt dazu verwendet wird, den Gewindenagel in die Dübelhülse einzutreiben, so daß durch Angreifen an der Kegelfläche jetzt eine Aufweitung zunächst des ersten Spreizbereiches 4 und dann des zweiten Spreizbereiches 5 erfolgt. Dabei weiten sich zunächst die Längsschlitze 7 des ersten Spreizbereiches 4 auf, anschließend erweitern sich die Längsschlitze 8 des zweiten Spreizbereiches 5. Der zwischen dem Ende der ersten Längsschlitze 7 und dem Beginn des zweiten Längsschlitzes 8 gebildete Bereich 25, siehe Fig. 1, bildet dann einen sich schrägstellenden Steg. Bei der Aufweitung der Längsschlitze 8 reißen die Stege 12 ab. Die Aufweitung des aus den beiden Spreizbereichen 4 und 5 bestehenden Spreizteils erfolgt mit einer gleichmäßigeren und gleichmäßiger über die Länge verteilten Aufspreizkraft, so daß der Dübel auch in lockerem oder mit Ausbrechungen versehenem Baumaterial hält.

## Patentansprüche

1. Schlagdübel, mit
1.1 einem insbesondere als Gewindenagel ausgebildeten Spreizelement und
1.2 einer Dübelhülse, die
1.2.1 im Bereich ihres äußeren Endes einen Dübelkopf (1),
1.2.2 einen sich an den Dübelkopf (1) anschließenden Schaftteil (3) und
1.2.3 einen sich an den Schaftteil (3) anschließenden Spreizteil (4, 5) aufweist, der
1.3 mindestens einen von dem Schaftteil (3) ausgehenden und vor dem Dübelende endenden Längsschlitz (7) zur Bildung eines ersten Spreizbereiches (4) und
1.4 mindestens einen etwa im mittleren Bereich des Spreizteils beginnenden und bis zum Dübelende (9) reichenden Längsschlitz (8) zur Bildung eines zweiten Spreizbereiches (5) enthält,
dadurch gekennzeichnet, daß sich die Längsschlitze (7, 8) beider Spreizbereiche (4, 5) in Längsrichtung der Dübelhülse überlappen.

2. Schlagdübel nach Anspruch 1, bei dem der sich an den Schaftteil (3) anschließende Längsschlitz (7) gegenüber dem anderen Längsschlitz (8) in Umfangsrichtung versetzt angeordnet ist.

3. Schlagdübel nach Anspruch 1 oder 2, bei dem der Dübelkopf (1) einen gegenüber der Dübelhülse vergrößerten Umfang aufweist.

4. Schlagdübel nach einem der vorhergehenden Ansprüche, bei dem die Zahl der Längsschlitze (7, 8) in beiden Spreizbereichen (4, 5) unterschiedlich groß ist.

5. Schlagdübel nach einem der vorhergehenden Ansprüche, bei dem die Außenfläche der Dübelhülse beidseits des Längsschlitzes (7) des ersten Spreizbereiches (4) von der Kreisform des Querschnitts nach innen abweichend abgeflacht ausgebildet ist.

6. Schlagdübel nach einem der vorhergehenden Ansprüche, bei dem die Innenöffnung (14) der Dübelhülse von dem Dübelkopf (1) ausgehend einen ersten zylindrischen Bereich (15) und daran anschließend einen sich in seinem Durchmesser verringernden Bereich (17) aufweist.

7. Schlagdübel nach Anspruch 6, bei dem die Länge des zylindrischen Bereichs (15) der Innenöffnung (14) etwa der Länge des Schaftteils (3) der Dübelhülse entspricht.

8. Schlagdübel nach Anspruch 6 oder 7, bei dem zwischen dem zylindrischen (15) und dem sich verjüngenden Bereich (17) der Innenöffnung (14) der Dübelhülse eine etwa rechtwinklig verlaufende Innenschulter (16) ausgebildet ist.

9. Schlagdübel nach einem der vorhergehenden Ansprüche, bei dem das Spreizelement ein mit einem Gewinde (23) versehener Schraubnagel ist, dessen Schaft (21) an seiner Spitze einen ersten gewindefreien Abschnitt (25) aufweist.

10. Schlagdübel nach Anspruch 9, bei dem der gewindefreie Abschnitt (25) in seinem Durchmesser an den zylindrischen Abschnitt (15) der Innenöffnung (14) der Dübelhülse angepaßt ist.

## Claims

1. Knock-in pin dowel, having
1.1 an expandable element more particularly constructed as a threaded nail and
1.2 a dowel shell, which
1.2.1 in the area of its outer end has a dowel head (1),
1.2.2 a shaft part (3) connected to the dowel head (1) and
1.2.3 an expandable part (4, 5) connected to the shaft part (3) and which
1.3 has at least one longitudinal slit (7) starting from the shaft part (3) and ending upstream of the dowel end, for forming a first expandable area (4) and
1.4 at least one longitudinal slit (8) starting roughly in the central area of the expandable part and extending up to the dowel end (9), for forming a second expandable area (5),
characterized in that the longitudinal slits (7, 8) of both expandable areas (4, 5) overlap in the longitudinal direction of the dowel shell.

2. Knock-in pin dowel according to claim 1, wherein the longitudinal slit (7) connected to the shaft part (3) is circumferentially displaced with respect to the other longitudinal slit (8).

3. Knock-in pin dowel according to claim 1 or 2, wherein the dowel head (1) has a larger circumference compared with the dowel shell.

4. Knock-in pin dowel according to one of the preceding claims, wherein the number of longitudinal slits (7, 8) in the two expandable areas (4, 5) differs.

5. Knock-in pin dowel according to one of the preceding claims, wherein the outer face of the dowel shell on either side of the longitudinal slit (7) of the first expandable area (4) is flattened in inwardly diverging manner from the circular shape of the cross-section.

6. Knock-in pin dowel according to one of the preceding claims, wherein the inner opening (14) of the dowel shell, starting from the dowel head (1), has a first cylindrical area (15) and following onto the same an area (17) whose diameter decreases.

7. Knock-in pin dowel according to claim 6, wherein the length of the cylindrical area (15) of the inner opening (14) roughly corresponds to the length of the shaft part (3) of the dowel shell.

8. Knock-in pin dowel according to claim 6 or 7, wherein between the cylindrical area (15) and the tapering area (17) of the inner opening (14) of the dowel shell, is formed an inner shoulder (16) running approximately at right angles.

9. Knock-in pin dowel according to one of the preceding claims, wherein the expandable element is a screw nail provided with a thread (23) and whose shaft (21) has at its tip a first thread-free portion (25).

10. Knock-in pin dowel according to claim 9, wherein the thread-free portion (25) has its diameter adapted to the cylindrical portion (15) of the inner opening (14) of the dowel shell.

## Revendications

1. Cheville à percussion comprenant
1.1 un élément d'écartement ayant en particulier la forme d'un clou fileté et
1.2 une douille de cheville, qui
1.2.1. présente dans la zone de son extrémité externe une tête de cheville (1),
1.2.2 une partie de tige (3) dans le prolongement de la tête de cheville (1) et
1.2.3 une partie d'écartement (4, 5) dans le prolongement de la partie de tige (3), partie d'écartement qui
1.3 comprend au moins une fente allongée (7) partant de la partie de tige (3) et se terminant à l'extrémité de cheville pour former une première zone d'écartement (4) et
1.4 au moins une fente allongée (8) commençant à peu près au milieu de la partie d'écartement et allant jusqu'à l'extrémité de cheville (9) pour la formation d'une seconde zone d'écartement (5), caractérisée en ce que les fentes allongées (7, 8) des deux zones d'écartements (4, 5) se chevauchent dans le sens longitudinal de la douille de cheville.

2. Cheville selon la revendication 1, où la fente allongée (7) dans le prolongement de la partie de tige (3) est disposée en décalé par rapport à l'autre fente allongée (8) dans le sens périphérique.

3. Cheville selon la revendication 1 ou 2, où la tête de cheville (1) présente une périphérie agrandie par rapport à la douille de cheville.

4. Cheville selon l'une des revendications précédentes, où le nombre des fentes allongées (7, 8) est différent dans les deux zones d'écartement (4, 5).

5. Cheville selon l'une des revendications précédentes, où la surface externe de la douille de cheville de part et d'autre de la fente allongée (7) de la première zone d'écartement (4) est constituée par la forme de cercle de la section transversale de manière aplatie vers l'intérieur.

6. Cheville selon l'une des revendications précédentes, où l'ouverture interne (14) de la douille de cheville présente en partant de la tête de cheville (1) une première zone cylindrique (15) et dans le prolongement une zone (17) de diamètre décroissant.

7. Cheville selon la revendication 6, où la longueur de la zone cylindrique (15) de l'ouverture interne (14) correspond approximativement à la longueur de la partie de tige (3) de la douille de cheville.

8. Cheville selon la revendication 6 ou 7, où entre la zone cylindrique (15) et la zone se rétrécissant (17) de l'ouverture interne (14) de la douille de cheville, il est ménagé un épaulement interne (16) s'étendant en angle droit.

9. Cheville selon l'une des revendications précédentes, où l'élément d'écartement est un clou fileté muni d'un filet (23) dont la tige (21) présente à sa pointe une première section sans filet (25).

10. Cheville selon la revendication 9, où le diamètre de la section sans filet (25) est adapté à la section cylindrique (15) de l'ouverture interne (14) de la douille de cheville.
